Europäisches Patentamt

European Patent Office

Office européen des brevets

(19)

(11) Publication number:

**0 381 654**

**A1**

# EUROPEAN PATENT APPLICATION

(12)

(21) Application number: 90850039.0

(22) Date of filing: 30.01.90

(51) Int. Cl.⁵: **B65D 81/20, B65D 81/24**

(30) Priority: 31.01.89 SE 8900327

(43) Date of publication of application:
08.08.90 Bulletin 90/32

(84) Designated Contracting States:
AT BE CH DE DK ES FR GB GR IT LI NL SE

(71) Applicant: **Lagan Plast AB**
**Berghem**
**S-341 91 Ljungby(SE)**

(72) Inventor: **Jönsson, Sven-Ake**
**Mosslelundsgränd 27**
**S-331 33 Värnamo(SE)**

(74) Representative: **Linde, Leif**
**Vernamo Patentbyra AB Persegard**
**S-27400 Skurup(SE)**

(54) A packaging method and a package for long-time storage of products.

(57) In a method for long-time storage of products
sensitive to the influence of the air, preferably food
products, the products are applied into and are
stored in self-supporting packages (2) of a plastic
material which per se have a gas permeability which
is too high for allowing a long-time storage of the
products. A plurality of the packages (2) are com-
bined in for example piles and the combined, self-
supporting packages are tightly enclosed with foil (6) ·
of a material having lower gas permeability than the
plastic material of the self-supporting packages. The
invention also relates to a package for long-time
storage of products in accordance with the method.

EP 0 381 654 A1

# A packaging method and a package for long-time storage of products

The present invention relates to a packaging method and a package for long-time storage of products sensitive to the influence of the air, for example food products.

When manufactured from plastic materials, self-supporting packages, such as containers, tubes and bottles, have for different reasons only to restricted extent been usable for packaging products sensitive to the influence of the air, for example food products, chemical-technical products and drugs. Thus, such plastic materials which for economical reasons are acceptable for the manufacturing of self-supporting packages, for example olefin plastics, such as polyethylene and polypropylene, because of their relatively high gas permeability only allow packaging of products which are relatively insensitive to the influence of the air or packaging of products whereby it is possible to restrict the dwell time of the products in the packages by controlled storage and high turnover rate. In certain cases it is not possible to restrict the dwell time of the products in the packages and in such cases it has hitherto been necessary to use self-supporting packages of other materials than plastic, for example glass or sheet metal. A case where it is not possible to restrict that dwell time of the products in the packages by controlled storage and high turnover rate is at the packaging of preserved vegetables, such as cucumbers and celery where a complete harvest must be packed so as to be successively consumed up to the next harvest. This requires that the packages can constitute an adequate protection for the products for a time of at least one year and in practice at least about 18 months.

Many attempts have been made to provide by suitable selections of materials and combinations of materials self-supporting plastic packages which allow long-time storage of products which are sensitive to the influence of air. However, these attempts have implied problems which have led to the necessity of retaining the glass or sheet metal packages. The problems are that the plastic materials which have a sufficiently low gas permeability are too expensive, have too mad mechanical strength, cannot be pasteurized, have bad resistence to moisture, are because of bad flow difficult to process by means of conventional, cheap manufacturing technique, for example injection moulding, and so on.

The object of the present invention is to obviate the above difficulties and drawbacks and to provide a method and a package using self-supporting plastic material packages for packing products which are sensitive to the influence of the air, for example food products, allowing a long-time storage of the products.

In order to comply with this object the method according to the invention is characterized in that the self-supporting packages in which the products are applied consist of a plastic material having a gas permeability which is too high for long-time storage of the products, that a plurality of the self-supporting packages containing the products are combined in for example piles and that the combined packages are tightly enclosed with foil of a material having a lower gas permeability than the plastic material of the self-supporting packages.

By means of the method according to the invention it is possible to deliver the products in self-supporting plastic packages to the final user without causing unreasonably high costs for the packages. Thus, it is possible to use cheap plastic materials, such as polyethylene or polypropylene for the manufacturing of the self-supporting packages. The products packaged in accordance with the invention are protected against the influence of the air by the foil having a low gas permeability, when the products are delivered to a retailer or the like. At the retailer the protective foild is not broken until the self-supporting packages shall be exposed in sales premises. After the breaking of the protective foil the products are protected only by the plastic material of the self-supporting packages, and the products must thereupon be consumed within a restricted period of time. However, this period of time is quite sufficient for complying with normal requirements for storage and turnover rate, for which reason the use of a plastic material of a kind which is insufficient from the protective point of view does not represent any drawback in connection with the method according to the present invention.

By applying the method according to the invention it is possible to store at a low cost products which are sensitive to the influence of the air, for example food products, for a long time, for example 18 months, which makes it possible to use self-supporting plastic packages for packaging also food products which are harvested once a year.

In the method according to the invention it is suitable that the self-supporting packages consist of olefin plastic, such as polyethylene or polypropylene which means that the possibility for the invention to use cheap plastic materials for the manufacturing of the self-supporting packages is fully utilized.

It is suitable that the combined packages are tightly enclosed with foil having a high barrier capacity, for example polyester foil, polyamide foil and/or aluminum foil.

In accordance with the invention it is also possible to improve the mechanical strength of the established package by including further foils or cardboard material therein.

In order further to prevent detrimental influence on the products of the package it is according to the invention preferred that the air present inside the foil of material having lower gas permeability than the plastic material of the self-supporting packages is removed or relieved from substances which have a detrimental influence on the products of the self-supporting packages.

The invention also relates to a package for long-time storage of products sensitive to the influence of the air in accordance with the method of the invention.

The invention is described in the following with reference to the accompanying drawings.

Fig. 1 is a schematic perspective view of a package provided in accordance with the invention.

Fig. 2 is a section on line II - II of Fig. 1.

Fig. 3 is a section corresponding to Fig. 2 of a modified embodiment of the package according to the invention.

Fig. 4 is a section corresponding to Fig. 2 of a further modified embodiment of the package according to the invention.

The method according to the invention is intended to be applied in packaging and long-time storage of products sensitive to the influence of the air. For example, the products can be constituted by food products, but there is of course also many other products, for example chemical-technical products and drugs, having the same sensitivity to the influence of the air as food products. It may be especially advantageous to apply the method according to the invention in packaging and long-time storing preserved vegetables, for example cucumbers and celery, where a complete harvest is packed and is then succesively consumed up to the next harvest. This requires a desirable durability of the packages of at least 18 months.

The products to be packed in accordance with the method of the invention, for example preserved cucumbers or celery, are applied in containers 2 of plastic material. The plastic material is constituted by a cheap, easily workable plastic material allowing the manufacturing of packages of desired size and form but which has a gas permeability which per se is too high for long-time storage of the products. Such plastic materials are for example polyolefines, such as polyethylene and polypropylene. The packages 2 are provided with tight closures with or without a membrane closing. So far the packages constitute conventional plastic packages which are suitable for the sale of products at retailers and storage at the consumer during a time which is sufficient for this purpose but which is insufficient for long-time storage at resellers and retailers.

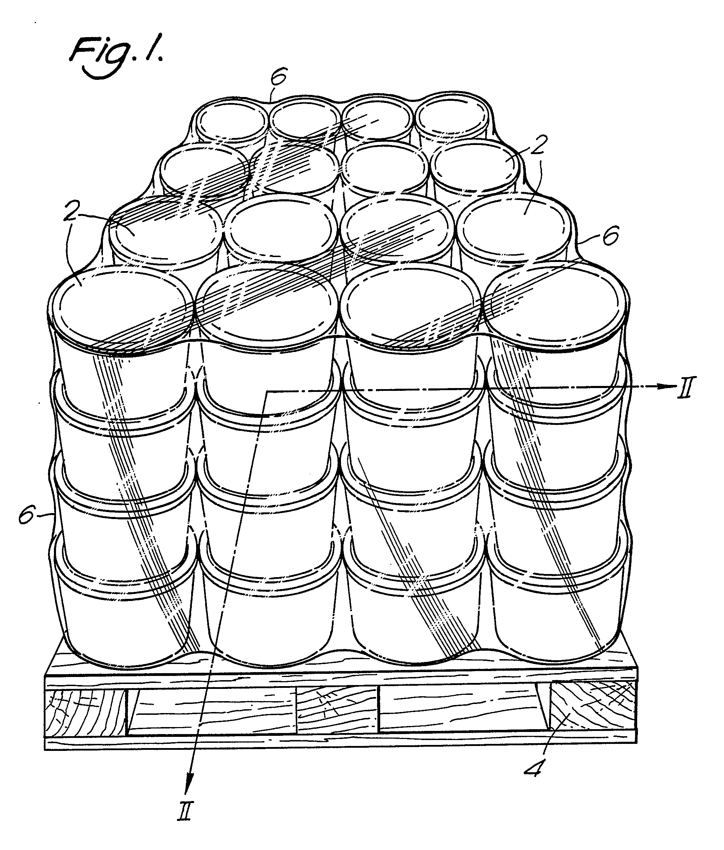

A plurality of these packages 2 are combined in accordance with Fig. 1 to piles on a pallet 4. The combined packages 2 are enclosed with foil 6 of a material having a lower gas permeability than the plastic material of the self-supporting packages 2. Preferably the foil material is constituted by plastic foil, for example polyester foil or polyamide foil. The foil 6 can also be constituted by aluminium foil or a foil of other plastic material and can of course consist of laminated materials wherein the laminate for example comprises a foil material having high strength and another foil material having good barrier properties.

Prior to the closing of the foil wrapping 6 there are taken measures to remove the air from inside the foil wrapping 6 or removing from said air substances which have a detrimental influence on the products enclosed in the containers 2. Thus, in the embodiment shown in the drawings the air is evacuated from the space inside the foil wrapping 6. The evacuation of the air can be provided with a relatively simple equipment, for example some kind of ejector pump. As an alternative it is possible to replace the air with an inert gas or to supply to the space inside the foil wrapping 6 a material consuming oxygen and/or other substances inside the foil wrapping, which are not desirable.

After a tight closing of the foil wrapping 6 the package is adapted for long-time storage of the products positioned in the containers 2. In this state the products are transported and stored up to a time when the individual containers shall be exposed at the retailer so as to be sold to the final consumer. Thereby, the time until the products shall be consumed is so short that the relatively bad capacity of the plastic material of the containers 2 to protect the products from the influence of the air is without importance.

In Fig. 3 there is shown a modified embodiment of the method and the package according to the invention. In this embodiment the package has been provided with an outer wrapping 8 enclosing the containers 2a and the foil wrapping material 6a so as to keep the package together and constitute a protection against mechanical damages to the foil material 6a.

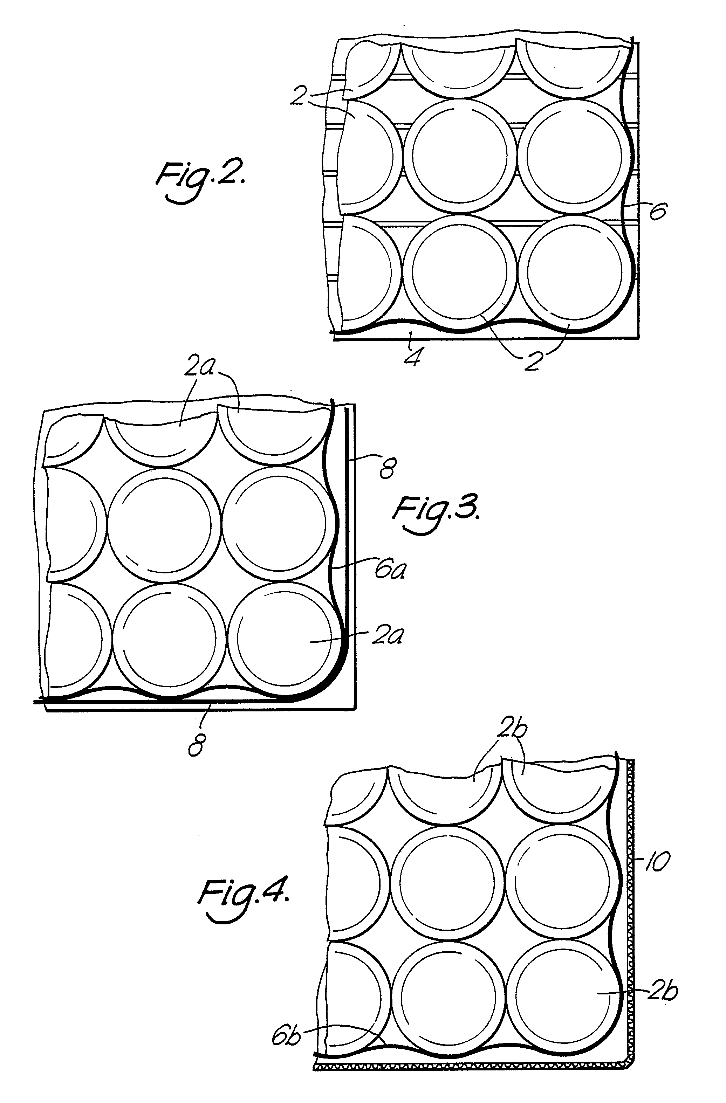

In the embodiment of the method and the package according to the invention as shown in Fig. 4 the unit consisting of the containers 2b and the foil material 6b has been applied in a corrugated board container 10 which keeps the package together and constitutes a mechanical protection for the foil material 6b.

The invention can be modified within the scope of the invention in respect of a selection of the material of the different components of the packages as well as the constructive form thereof.

## Claims

1. A method for long-time storage of products sensitive to the in fluence of the air, preferably food products, wherein the products are applied into and stored in self-supporting packages of plastic material, for example plastic containers, **characterized** in that the self-supporting packages in which the products are applied consist of a plastic material having a gas permeability which is too high for long-time storage of the products, that a plurality of the self-supporting packages containing the products are combined in for example piles and that the combined packages are tightly enclosed with foil of a material having a lower gas permeability than the plastic material of the self-supporting packages.

2. A method as claimed in claim 1, **characterized** in that the self-supporting packages consist of olefin plastic, such as polyethylene or polypropylene.

3. A method as claimed in claim 1 or 2, **characterized** in that the combined packages are tightly enclosed with foil having a high barrier capacity, for example a foil comprising polyester foil, polyamide foil and/or aluminium foil.

4. A method as claimed in any of the preceding claims, **characterized** in that a plurality of the self-supporting packages containing the products are combined to a plurality of piles on a pallet, in a container or the like and that the combination of self-supporting packages and the pallet, the container or the like is tightly enclosed with the foil of a material having a lower gas permeability than the plastic material of the self-supporting packages.

5. A method as claimed in any of claims 1 - 3, **characterized** in that the combined, self-supporting packages and the plastic material foil tightly enclosing the packages and having a lower gas permeability than the plastic material of the self-supporting packages are enclosed by an outer covering.

6. A method as claimed in claim 5, **characterized** in that the outer covering consists of foil material.

7. A method as claimed in claim 5, **characterized** in that the outer covering consists of cardboard.

8. A method as claimed in any of the preceding claims, **characterized** in that the air inside the foil of material having a lower gas permeability than the plastic material of the self-supporting packages is removed or is relieved from substances having a detrimental influence of the products in the self-supporting packages.

9. A package for long-time storage of products sensitive to the influence of the air, preferably food products, comprising self-supporting packages of plastic material, for example plastic containers, adapted to receive the products, **characterized** in that the self-supporting packages (2) in which the products are intended to be applied per se consist of a plastic material having a gas permeability which is too high for long-time storage of the products, that a plurality of the self-supporting packages are combined in for example piles and that the combined, self-supporting packages are tightly enclosed with foil (6) of a material having lower gas permeability than the plastic material of the self-supporting packages.

Neu eingereicht / Newly fil
Nouvellement déposé

# Fig. I.

Fig.2.

2

6

4

2

2a

Fig.3.

8

6a

2a

8

8

2b

Fig.4.

10

2b

6b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 310 733 (COMPACT INDUSTRIES) * Page 9, lines 19-33; page 10, lines 7-14; figures 2,3 * | 1,3,8,9 | B 65 D 81/20 B 65 D 81/24 |
| Y | | 2,4,5,7 | |
| Y | BE-A- 564 569 (RICH. HENGSTENBERG) * Page 1, lines 6-13 * | 2 | |
| X | DE-A-3 044 561 (SIG SCHWEIZERISCHE IND.) * Claim 1; page 9, lines 17-21; figures 2-6 * | 1 | |
| A | FR-A-1 185 777 (MONNET) * Page 1, right-hand column; figures * | 1 | |
| Y | DE-A-1 586 456 (ALKOR-OERLIKON-PLASTIC) * Figures 3,4 * | 4 | |
| Y | US-A-4 700 841 (KIMBERLY-CLARK) * Column 3, lines 28-45; figures 1-3 * | 5,7 | |

TECHNICAL FIELDS SEARCHED (Int. Cl.5)

B 65 D

The present search report has been drawn up for all claims

| Place of search | Date of completion of the search | Examiner |
|---|---|---|
| THE HAGUE | 09-04-1990 | MARTINEZ NAVARRO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)